# EUROPEAN PATENT SPECIFICATION

(11) **EP 2 790 369 B1**
(45) Date of publication and mention of the grant of the patent: **04.03.2020**
(21) Application number: 11876871.2
(22) Date of filing: 08.12.2011
(51) Int. Cl.: H04L 29/06, H04J 3/22, H04L 1/00, H04L 1/08, H04L 1/20

(54) **MULTIPLEXED COMMUNICATION SYSTEM, TRANSMITTING DEVICE AND RECEIVING DEVICE**
MULTIPLEXKOMMUNIKATIONSSYSTEM, ÜBERTRAGUNGSVORRICHTUNG UND EMPFANGSVORRICHTUNG
SYSTÈME DE COMMUNICATION MULTIPLEXÉ, DISPOSITIF DE TRANSMISSION ET DISPOSITIF DE RÉCEPTION

(43) Date of publication of application: 15.10.2014
(73) Proprietor: FUJI Corporation, Chiryu Aichi (JP)
(72) Inventor: NAGASAKA, Nobuo, Chiryu Aichi (JP); IMADERA, Yasuaki, Chiryu Aichi (JP); HIROTA, Shigemoto, Chiryu Aichi (JP)
(74) Representative: Grünecker Patent- und Rechtsanwälte PartG mbB
(86) International application number: PCT/JP2011/078367
(87) International publication number: WO 2013/084327

(56) References cited:
- EP-A2- 1 113 614
- EP-A2- 2 120 339
- JP-A- S6 331 330
- JP-A- H05 175 941
- JP-A- H11 150 530
- JP-A- H11 215 136
- JP-A- 2001 189 713
- JP-A- 2002 152 181
- JP-A- 2007 258 796
- US-A- 5 905 756
- CANALES M ET AL: "Performance Analysis of Multiplexed Medical Data Transmission for Mobile Emergency Care Over the UMTS Channel", IEEE TRANSACTIONS ON INFORMATION TECHNOLOGY IN BIOMEDICINE, IEEE SERVICE CENTER, LOS ALAMITOS, CA, US, vol. 9, no. 1, 1 March 2005 (2005-03-01), pages 13-22, XP011127536, ISSN: 1089-7771, DOI: 10.1109/TITB.2004.838362

## Description

The present invention is related to a multiplexing communication system, a transmitting device/receiving device for a multiplexing communication system, and a processing device for multiplexing and transmitting data from multiple apparatuses; in particular the present invention is related to a processing device, receiving device, transmitting device, and multiplexing communication system which multiplexes and forwards multiple data types.

Technology related to data transmission has previously been disclosed. For example, technology has been disclosed (such as Prior Art 1) for dividing data series into blocks, and adding or reducing the quantity of error correction bits by each block based on the level of necessity of error correction for each block. Also, with regard to encoded image contents via a network, technology has been disclosed (such as Prior Art 2) for restoring lost packets based on correction packets which are used when correction packets are selected and received by a receiving unit in order of least data amount in cases in which the amount of lost packets which cannot be restored is smaller than a specified amount. Moreover, technology related to the transmission of medical data has been disclosed in Prior Art 3.

Prior Art 1: Japanese Unexamined Patent Application Publication Number Heisei 10-178419
Prior Art 2: Japanese Unexamined Patent Application Publication Number 2010-161550
Prior Art 3: Canales M et al, "Performance Analysis of Multiplexed Medical Data Transmission for Mobile Emergency Care Over the UMTS Channel", IEEE TRANSACTIONS ON INFORMATION TECHNOLOGY IN BIOMEDICINE, IEEE SERVICE CENTER, LOS ALAMITOS, CA, US, (20050301), vol. 9, no. 1, doi:10.1109/TITB.2004.838362, ISSN 1089-7771, PAGE 13 - 22

Background art exemplified by Prior Art 1 is an item for dividing a series of inputted data by blocks and specifying error correction rules for each divided block. For example, it is an item which, for a series of inputted data in which 2 types of different data are forwarded alternately and for which the required error correction rules are each different, applies appropriately the error correction rules required for each different block by dividing blocks by each data type.

Also, background art exemplified by the above Prior Art 2 is an item for reducing the lost packets when recreating received image contents, for setting the lost packets against the multiple correction packets to be restored, for discovering the correction packets for which the lost ratio falls within the range of a threshold value, and for recording as a contents receiving processing method.

However, in all of the background art exemplified in the above Prior Art, for communication of multiplexed data strings in which multiple data types for which the error detection processing is different for each are mixed, it is not possible to perform suitable error detection processing for each data type.

In other words, in the background art exemplified in Prior Art 1, it is assumed blocks are continuous data strings within data series and, with regard to continuous data strings extracted as blocks, error correction rules can be determined. Even if multiplexed data strings in which multiple data types are mixed are divided into blocks, multiple data types are mixed within blocks and it is not possible to properly determine error detection processing.

Also, in the background art exemplified in Prior Art 2, there is an item which, from multiple error detection processing, decides the processing for which the packet lost ratio falls within a defined range, and then after deciding, applies the decided error correction processing. The error correction processing applied to the image contents received during monitoring is the 1 decided processing, and there is no mention with regard to changing the processing based on the contents. It does not provide details related to performing suitable error detection processing for each data type when multiplexed data strings which have mixed multiple data types are received.

### SUMMARY

It is the object of the present invention to provide a multiplexing communication system, transmitting device, receiving device, and processing device which takes account of the above problems and can perform suitable error processing for each data type even when communicating multiplexed data strings which have mixed multiple data types for which the error processing differs for each.

This is achieved by the features of the independent claims.

The scope of the invention is defined in the appended claims. Any reference to "embodiment(s)" or "aspect(s) of the invention" in this description not falling under the scope of the claims should be interpreted as illustrative example(s) for understanding the invention.

According to the present invention, for each, even when multiplexing and communicating multiple data belonging to multiple data types for which the data amount is different, the processing method and control with respect to the data are different and the data transmission rate and data processing time are different, it is possible to transmit data by performing setting processing for error detection for each data belonging to different data types. Because of this, if the multiplexing is inversed and each data restored at the receiving side, because suitable error detection and setting processing for error correction is performed for each data, it is possible to perform error detection or detection/correction processing individually for each based on setting processing for error correction or error detection set for each data. Even in cases in which data belonging to multiple different data types is mixed using multiplexing and transmitted, suitable error detection/correction can be performed for each individual data and error detection/correction processing can be performed efficiently.

In this case, error processing cannot be performed with respect to multiplex data strings, so processing time for error detection/correction with respect to multiplex data strings by the receiving side is not required. By this, data belonging to multiple data types is mixed, the timing required for each data differs, and it is not necessary for all data to wait in the same way for the processing time until error detection/correction processing for the overall multiplex data strings is completed. Error processing is performed based on the required time for each individual data and processing and control can be shared which is favorable.

Also, in the present invention, error processing may be selected based on the data request rate decided based on the data transmission rate and data processing time. Also, the arrangement frequency for the multiplex data strings may decided based on the data request rate. For each data, because the data arrangement frequency and error processing are based on what is required, data transmission can be performed efficiently for each data.

Also, in the present invention, processing with respect to the data errors may, based on the data request rate, be selected from one of: (1) forward error correction processing, (2) majority processing which defines the data value updated which takes the majority logic with respect to multiple times of data transmission, (3) processing which takes the data update conditions as the same data value acquired by multiple times of data transmission.

Forward error correction processing (1) is applicable for data for which data resending is restricted based on limits such as the data request rate. This is an item to perform processing to correct and restore error data at the receiving side. This is an item which uses coding such as Reed-Solomon coding or Hamming coding. This is error processing suitable for use with data such as image data for which the data amount is large and difficult to resend because of data transmission rate restrictions.

Majority logic (2) is processing performed when data values accounting for a majority by multiple times transmission are judged correct. The data amount is smaller than compared to data applicable for processing (1) above, but this is applied to data for which the data transmission is fast and rapid processing is required. For individual transmissions, the security of error detection functionality for data given coding such as parity check coding is advantageous. This is effective processing which is suitable for data for which it is necessary to perform processing accurately by data judged for probability by multiple time transmission. For example, this is applicable for control signals such as for servo motors.

Processing (3) is processing performed when it is confirmed that all the multiple time transmissions are the same data. This is applicable when either the data amount or data request rate is smaller than (1) or (2) above. For individual transmissions, the security of error detection functionality for data given coding such as parity check coding is advantageous. This is effective processing which is suitable for data for which it is necessary to perform processing after it is confirmed that data values are uniform by multiple times transmission. For example, this is applicable for items such as I/O signals from switches or sensors.

Also, for the above processing (2) and (3), when multiple times data transmission is performed, for at least one data, arrangement is effective for different multiplex data strings. By this, it is possible to guarantee the robustness with respect to continuous data errors such as burst errors. For burst errors which occur simultaneously with respect to multiple data which is adjacent and continuous, it is possible to reduce the probability that errors are received if differing multiplex data strings are divided and arranged. Generally, the introduction of errors can be curbed by dividing and then transmitting.

Also, the multiplexing communication system provided in this application can be configured from the transmitting device and the receiving device according to the present invention. Suitable error processing for each data belonging to different data types can be performed, and multiple data can be multiplexed and communicated efficiently.

Also, in a processing device according to the present invention, for each, with respect to the multiple apparatuses which perform data processing and data communication by the fixed data transmission rate and data processing time, data are multiplexed after setting processing for data error detection of each apparatus in the error setting means. By this, even in cases in which data different by each apparatus is mixed and transmitted, suitable error processing for data by each apparatus can be performed.

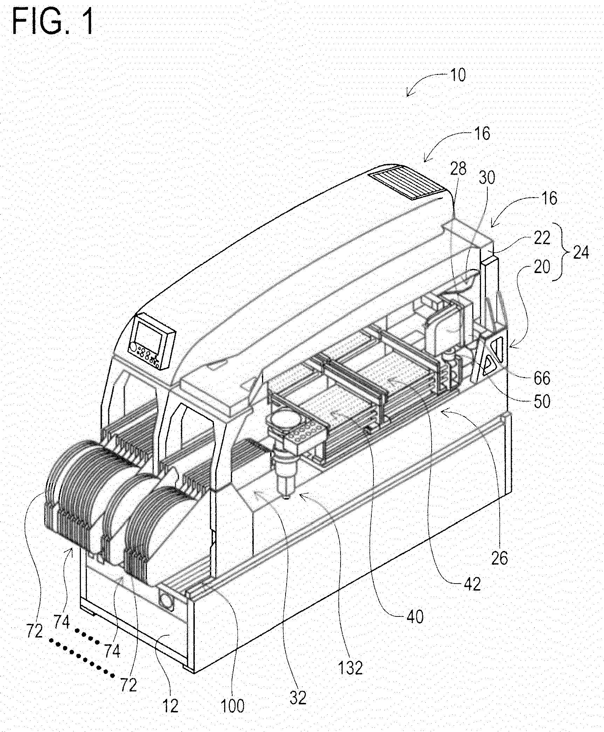

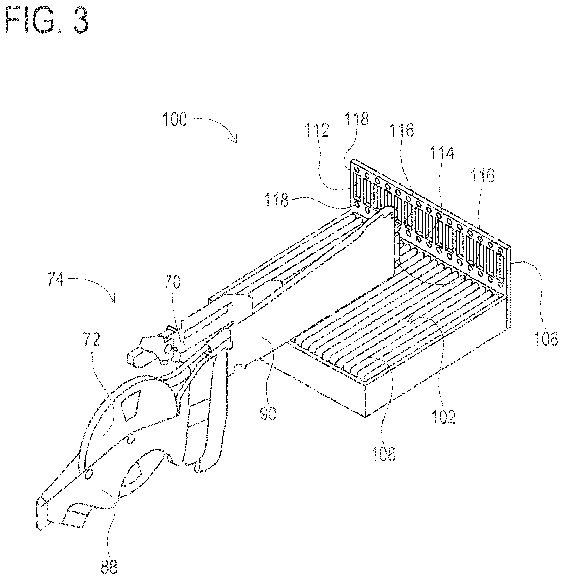

FIG. 1
   This is a perspective view showing an electronic component mounter machine configured from 2 electronic component mounters arranged side by side to which electronic component supply devices are attached, which is a machine to which the present multiplexing communication system can be applied.
FIG. 2
   This is a top view showing a section of a tape feeder of the electronic component supply device shown in FIG. 1 and taped components indexed by that electronic component supply device.
FIG. 3
   This is a perspective view showing the electronic component supply device shown in FIG. 1.
FIG. 4
   This is a cross section which shows the tape feeder shown in FIG. 3.
FIG. 5
   This is a block diagram showing the control device equipped in the electronic component mounter machine shown in FIG. 1.
FIG. 6
   This is a diagram showing schematically the configuration when the multiplexing communication system is applied to the electronic component mounter machine from FIG. 1.
FIG. 7
   This is a diagram showing the breakdown of each data type to be multiplexed and communicated.
FIG. 8
   This is a block diagram showing the control device equipped with optical wireless device 1.
FIG. 9
   This is a block diagram showing the control device equipped with optical wireless device 3.
FIG. 10
   This is a diagram showing an example of a multiplex data string.

The following describes in detail referring to the figures an embodiment for the present invention. First, as a possible example for applying the present multiplexing communication system, referring to FIG. 1 to FIG. 5, the configuration of the electronic component mounting machine is described.

Electronic component mounter machine (hereafter in some cases abbreviated to "mounter machine") 10 is shown in FIG. 1. That figure is a perspective view with some sections of the external parts of mounter machine 10 omitted. Mounter machine 10 is configured including 1 system base 12 and 2 electronic component mounter modules (hereafter in some cases abbreviated to "mounter module") 16 arranged lined up side by side adjacent to each other on that system base 12, and is used to perform the mounting work of electronic components on a circuit board. For the description below, the direction in which mounter modules 16 are lined up side by side is referred to as the X-axis direction and the horizontal direction perpendicular to that direction is the Y-axis direction.

Each mounter module 16 equipped on mounter machine 10 comprises, mainly, mounter module main body 24 configured including frame 20 and beam 22 mounted above that frame 20; conveyance device 26 for conveying circuit boards in the X-axis direction as well as securing them in a specified position; mounting head 28 for mounting electronic components on the circuit board secured by the conveyance device 26; moving device 30 for moving mounting head 28 attached to beam 22 in the X-axis direction and Y-axis direction; and electronic component supply device (hereafter in some cases abbreviated to "supply device") 32 for supplying electronic components to mounting head 28 positioned at the front of frame 20.

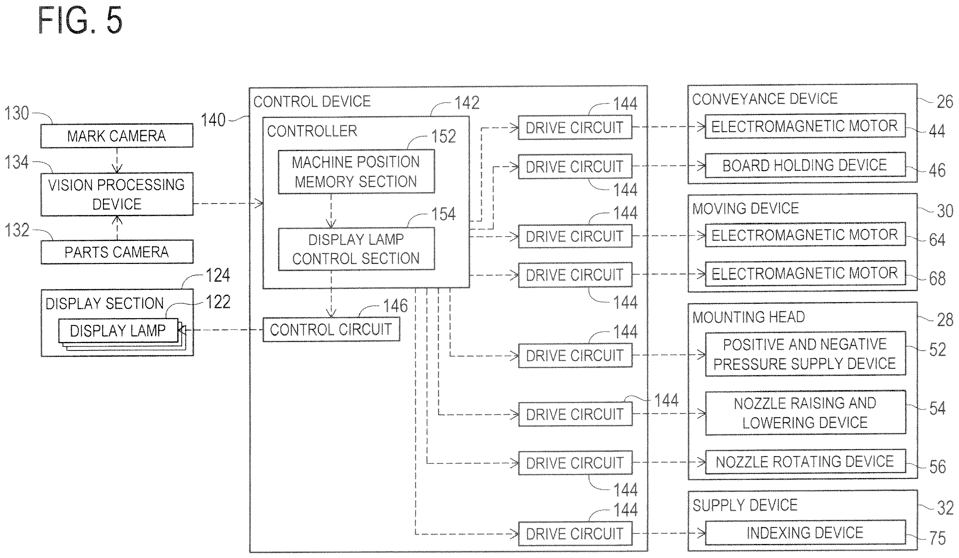

Conveyance device 26 comprises 2 conveyor devices 40 and 42 and those 2 conveyor devices 40 and 42 are positioned in the center of the Y-axis direction of frame 20 so that they are parallel to each other and extend in the X-axis direction. Each of the 2 conveyor devices 40 and 42 are configured to convey circuit boards held by conveyor devices 40 and 42 in the X-axis direction using electromagnetic motor 44 (refer to FIG. 5). Furthermore, each of the 2 conveyor devices 40 and 42 have a board holding device 46 (refer to FIG. 5) and are configured to hold circuit boards securely in a specified position.

Also, mounting head 28 is for mounting electronic components on a circuit board held by conveyor device 26, and has suction nozzles 50 on its lower side for picking up electronic components. Suction nozzles 50 are configured with paths for negative air pressure and positive air pressure from a positive and negative air pressure supply device 52 (refer to FIG. 5) to pass through, with the electronic components being held by suction based on negative pressure, and with the electronic components which are being held being released by supplying a small amount of positive pressure. Furthermore, mounting head 28 has nozzle raising and lowering device (refer to FIG. 5) 54 for raising and lowering suction nozzles 50 and nozzle rotating device (refer to FIG. 5) 56 for rotating suction nozzles 50 about the center axis of themselves, and can change the vertical direction position of the electronic components being held and the holding orientation of the electronic components. Further, suction nozzles 50 can be attached to and removed from mounting head 28, and can be changed based on things such as the size and shape of the electronic components.

Moving device 30 is for moving mounting head 28 to any position on frame 20, and is equipped with an X-axis direction slide mechanism (omitted from figure) for moving mounting head 28 in the X-axis direction, and a Y-axis direction slide mechanism (omitted from figure) for moving mounting head 28 in the Y-axis direction. The Y-axis direction slide mechanism has a Y-axis slider (omitted from figure) attached to beam section 22 which can move in the Y-axis direction, and electromagnetic motor (refer to FIG. 5) 64, and the Y-axis slider can be moved to any position in the Y-axis direction by that electromagnetic motor 64. Also, the X-axis direction slide mechanism has X-axis slider 66 attached to the Y-axis slider which can move in the X-axis direction, and electromagnetic motor (refer to FIG. 5) 68, and X-axis slider 66 can be moved to any position in the X-axis direction by that electromagnetic motor 68. And, by mounting head 28 being attached to that X-axis slider 66, mounting head 28 can be moved to any position on frame section 20 by moving device 30. Further, mounting head 28 can be attached to or removed from X-axis slide 66 in a one-touch operation, and it is possible to change to different types of operation head, for example, a dispensing head.

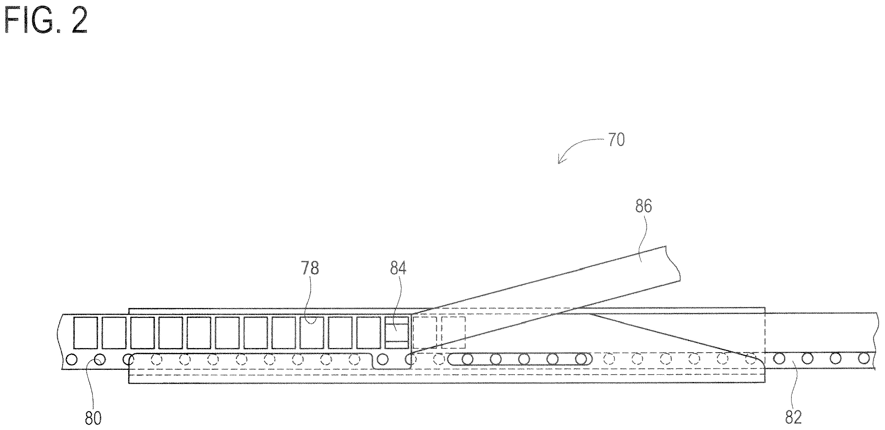

Also, supply device 32 is positioned on the front end of frame 20 and is a feeder type supply device. Supply device 32 has multiple tape feeders 74 which store taped components (refer to FIG. 2) 70 which are electronic components that have been taped which are in a wound state on reels 72, and multiple indexing devices (refer to FIG. 5) 75 which index taped components 70 which are stored in each of those multiple tape feeders 74, and is configured to supply consecutively electronic components from taped components 70 to the supply position for mounting head 28.

Taped components 70 are configured from, as shown in FIG. 2, carrier tape 82 formed with multiple storage cavities 78 and indexing holes 80 at the same pitch; electronic components 84 stored in storage cavities 78; and top cover tape 86 covering storage cavities 78 in which are stored electronic components 84 of carrier tape 82. On the other hand, tape feeders 74 are configured from, as shown in FIG. 3, reel holding section 88 for holding reel 72 on which those taped components 70 are wound, and feeder body 90 on the upper side of which taped components 70 pulled out from that reel 72 are extended.

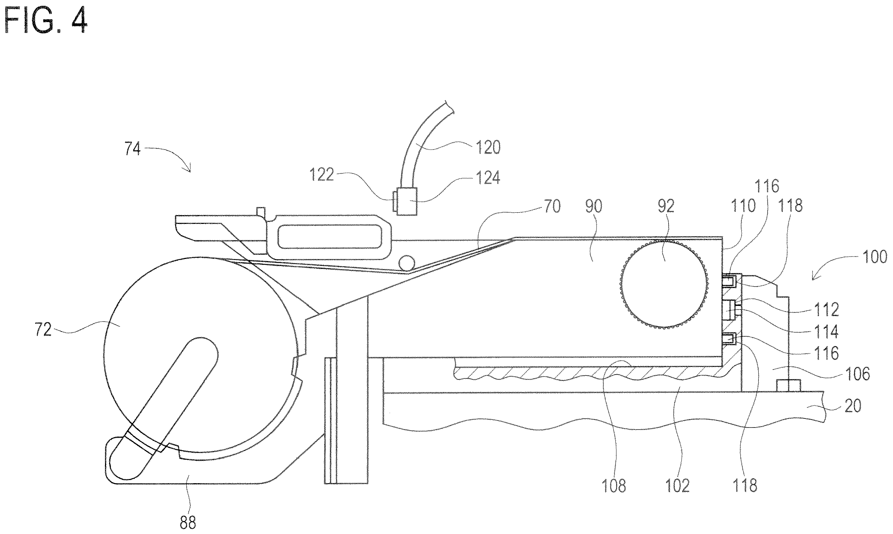

Inside feeder body 90, as shown in FIG. 4, sprocket 92 which engages with indexing holes 80 formed in carrier tape 82 of taped components 70 is enclosed, and by that sprocket 92 being rotated, taped components 70 are, with top cover tape 86 attached to carrier tape 82, indexed in the direction away from reel 72 along the top side of feeder body 90. Then, by peeling top cover tape 86 from carrier tape 82 using a peeling device (omitted from figure), at the end section of the top side of feeder body 90, circuit components 84 stored in storage cavities 78 are revealed consecutively, and electronic components 84 are removed by suction nozzles 50 from those revealed storage cavities 78.

Also, tape feeders 74 can be attached to and removed from tape feeder loading table (hereafter in some cases abbreviated to "loading table") 100 which is fixedly attached on the end section of the front of frame 20. Feeder loading table 100 is configured from slide section 102 which is provided on the upper surface of frame 20, and vertical surface section 106 assembled on a side close to conveyance device 26 of that slide section 102. On slide section 102, multiple slide grooves 108 are formed extending in the Y-axis direction, and it is possible to slide along each of those multiple slide grooves 108 with the bottom section of feeder body 90 of tape feeder 74 in an engaged state. Then, by sliding in the direction towards vertical surface section 106 with the bottom section of feeder body 90 in an engaged state, feeder body 90 side wall surface 110 of the side of the direction in which taped components 70 are indexed is attached to assembly surface section 106. By this, tape feeder 74 is loaded on loading table 100.

Multiple connector connection sections 112 are equipped on that vertical surface section 106, with respect to the above multiple slide grooves 108. On the other hand, on side wall surface 110 of tape feeder 74 which is attached to vertical surface section 106, connector 114 is provided, and is such that, when side wall surface 110 of tape feeder 74 is attached to vertical surface section 106, connector 114 is connected to connector connection section 112. Also, on side wall surface 110 of tape feeder 74, a pair of protruding pins 116 are provided above and below connector 114, such that they can be engaged with a pair of engagement holes 118 formed above and below connector connection section 112 of the vertical surface section of loading table 100.

Also, on the upper section of loading table 100, as shown in FIG. 4, cover 120 which can be opened and closed is provided. Cover 120 is attached to the end of the front side of beam 22 of mounter module 16 so that it can be moved rotationally along an axis line extending in the X-direction, such that it can be moved rotationally between a closed position covering loading table 100 and an open position revealing loading table 100. With tape feeders 74 loaded on loading table 100, when cover 120 is closed, feeder body 90 of those loaded tape feeders 74 are covered by cover 120.

On the lower end of that cover 120, display section 124 is attached which is provided with 3 display lamps 122 (only 1 is shown in the figure), such that, with tape feeders 74 loaded on loading table 100, if cover 120 is closed, that display section 124 is in a position above feeder body 90. Further, multiple display section 124s are provided with respect to multiple slide grooves 108, and display lamps 122 of those multiple display sections 124 turn on when tape feeders 74 are loaded on loading table 100, and are used as items to guide as to which of the multiple slide grooves 108 tape feeders 74 should be loaded on.

Also, mounter module 16 is equipped with mark camera (refer to FIG. 5) 130 and parts camera (refer to FIGS. 1 and 5) 132. Mark camera 130 is fixed to the lower surface of X-axis slide 66 in a state facing down, and, by being moved by moving device 30, can capture an image of any position on the surface of a circuit board. On the other hand, parts camera 132 is provided between supply device 32 and frame section 20 of conveyance device 26 in a state facing up, and can capture an image of electronic components being held by vacuum on suction nozzles 50 of mounting head 28. Image data obtained by mark camera 130 and image data obtained by parts camera 132 is processed by image processing device 134 (refer to FIG. 5), and items such as information related to the circuit board, the circuit board holding position error due to board holding device 46, and electronic component holding position error due to suction nozzles 50.

Furthermore, mounting module 16, as shown in FIG. 5, is equipped with control device 140. Control device 140 is equipped with controller 142 which consists mainly of a computer equipped with items such as CPU, ROM, and RAM; the above electromagnetic motors 44, 64, and 68; board holding device 46; positive and negative pressure supply device 52; nozzle raising and lowering device 54; nozzle rotating device 56; multiple drive circuits 144 with respect to each indexing device 75; and multiple control devices 146 with respect to each multiple display lamp 122 provided on multiple display sections 124. The driving power for items such as the conveyance device and moving device are connected to controller 142 via each drive circuit 144, such that operation of items such as the conveyance device and moving device can be controlled. Also, multiple display lamps 122 are connected to controller 142 via each control circuit 146, such that each of those multiple display lamps 122 can be controllably turned on. Also, there are also cases in which various types of switches which are not shown in the figures are provided on multiple display sections 124, and various kinds of control signals are sent based on the inputs of the switches with respect to each control circuit 146. Furthermore, image processing device 134 for processing image data obtained from mark camera 130 and parts camera 132 is connected to controller 142.

On mounter module 16, due to the configuration outlined above, it is possible to perform the work of mounting electronic components using mounting head 28 to a circuit board held by holding device 26. To describe in detail, first, the circuit board is conveyed to the mounting work position by conveyance device 26 and then the circuit board is held fixedly in that position. Next, mounting head 28 is moved above the circuit board by moving device 30, and an image of the circuit board is captured by mark camera 130. From that image the type of the circuit board and the holding position error of the circuit board due to conveyance device 26 is acquired. Electronic components for that type of circuit board which was acquired are supplied by tape feeders 74 of supply device 32, and mounting head 28 is moved by moving device 30 to the supply position for those electronic components. By this, the electronic components are held by vacuum by suction nozzles 50 of mounting head 28.

Next, with the electronic components being held, mounting head 28 is moved above parts camera 132 by moving device 30, and an image of the electronic components being held on mounting head 28 is captured by parts camera 132. From that image the holding position error of the electronic components is acquired. Then, mounting head 28 is moved to the mounting position above the circuit board by moving device 30, and the electronic components are mounted by mounting head 28 after suction nozzles 50 are rotated based on the holding position error of the circuit and the electronic components.

Now, the present multiplexing communication system can be applied to items such as electronic component mounter machines or electronic component placing machines as exemplified by electronic component mounter machine 10, or other automatic machines operating in various manufacturing lines. As described above, in electronic component mounter machine 10, image data from mark camera (refer to FIG. 5) 130 or parts camera (refer to FIGS. 1 and 5) 132 is communicated to control device 140. Drive control of each type of electromagnetic motors 44, 64, and 68 (refer to FIG. 5) and other moving devices by drive circuit 144, and light control of display lamps 122 by control circuit 146, are performed from control device 140.

Also, although not shown in the figures, servo control information required for servo control such as position information and torque information for items such as servo motors is fed back to control device 140 in real time from electromagnetic motors 44, 64, and 68 (refer to FIG. 5) and other moving devices. Control of electromagnetic motors 44, 64, and 68 (refer to FIG. 5) and other moving devices is performed by drive circuit 144 based on this information. Also, items such as conveyance device 26, mounting head 28, moving device 30, supply device 32, and display section 124 are, as required, equipped with various sensors or switches, and signals are communicated to control device 140 based on the operating conditions of each device or by switches being pushed manually.

In the below embodiment, a multiplexing communication system, transmitting device, receiving device, and processing device suitable to apply to data communication for electronic component mounter machine 10 is described.

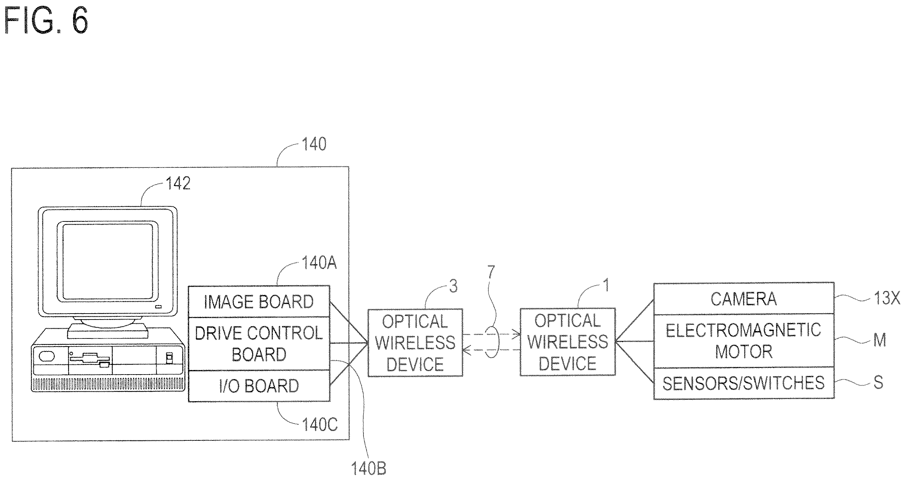

FIG. 6 is a diagram showing schematically the configuration when the multiplexing communication system disclosed in the embodiment is applied to electronic component mounter machine 10. Within electronic component mounter machine 10, when various data communication is performed between control device 140 and sections other than control device 140, a multiplexing communication system is used.

Control device 140 is controlled by controller 142 configured from a computer system such as a PC. Controller 142 is interfaced via image board 140A, drive control board 140B, and I/O board 140C. Image board 140A is the board for controlling the transmitting and receiving of image data. Drive control board 140B is the board for controlling the inputs and outputs of servo control information such as position information and torque information fed back for electromagnetic motors and movement commands which are commands when electromagnetic motors are moved. I/O board 140C is the board for controlling giving and receiving signals from items such as lamp display control and various sensors and switches.

Image board 140A, drive control board 140B, and I/O board 140C are connected at one end by communication path 7 via optical wireless device 3 and communication is performed by wireless optics along communication path 7. At the other end of communication path 7, cameras 13X, electromagnetic motors M, and sensors/switches are connected via optical wireless device 1. Here, cameras 13X are image capturing devices exemplified by mark camera (refer to FIG. 5) 130 or parts camera (refer to FIGS. 1 and 5) 132, and electromagnetic motors M are electromagnetic motors 44, 64, and 68 shown in FIG. 5 or other moving devices. Furthermore, sensors/switches S are equipped as required on items such as conveyance device 26, mounting head 28, moving device 30, supply device 32, and display section 124 (refer to FIG. 5).

In the multiplexing communication system exemplified in FIG. 6, image data captured by cameras 13X, servo control information such as position information and torque information acquired from electromagnetic motors M, and various I/O signals output from sensors/switches S, are multiplexed by optical wireless device 1 and communicated along communication path 7 as optical wireless signals. The communicated multiplexed signals are received, demultiplexed, and each data separated by optical wireless device 3. Within the separated data, image data are transmitted to image board 140A, servo control information is transmitted to drive control board 140B, and I/O signals are transmitted to I/O board 140C.

Image data, servo control information, and I/O signals received by optical wireless device 3 are processed in controller 142. The processing results from controller 142 are communicated along communication path 7 via optical wireless device 3 from drive control board 140B and I/O board 140C as movement commands to control electromagnetic motors M or other moving devices, and as display signals for light control of display lamps 122 (refer to FIG. 5); and the following controls are performed with respect to items such as electromagnetic motors M or other moving devices, and display lamps 122 (refer to FIG. 5) by optical wireless device 1.

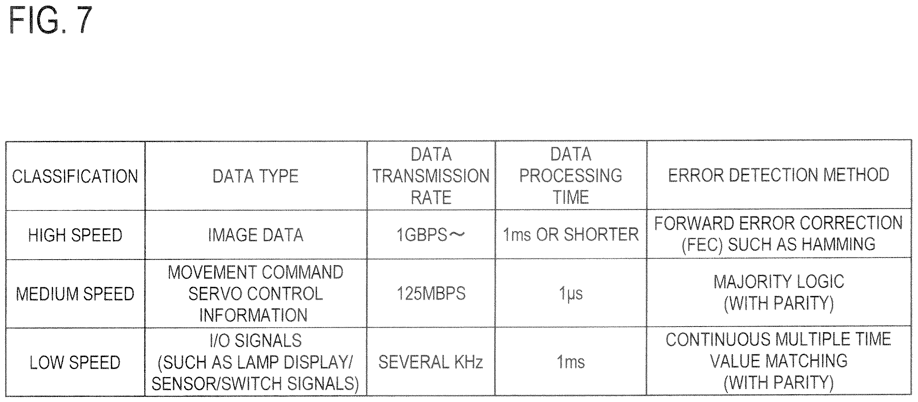

FIG. 7 is a diagram showing the breakdown of each data type to be multiplexed and communicated. 3 types of data are exemplified. Signals classified as (A) are high speed signals. Image data interfaced by image board 140A is exemplified. Signals classified as (B) are medium speed signals. Servo control information or movement commands interfaced by drive control board 140B is exemplified. Signals classified as (C) are low speed signals. I/O signals interfaced by I/O board 140C is exemplified.

Image data classified as A is data that, per frame, for example, is 2000 x 2000 pixels and has color depth of 8 bit per pixel. The amount of data that constitutes 1 frame is large. Because the amount of data per frame is large, it is not practical to perform resending of data with respect to bit errors. Due to this, instead of resending, it is normal to perform error correction at the receiving side. Because forward error correction (FEC) code Hamming code is included in the image data, the data amount is even larger. From this, as a standard for field networks in the field of FA, data transmission rates of 1 GBPS or faster are required. On the other hand, there is a slight allowance of time until the display of 1 frame is updated so it is acceptable for data processing time to be about 1 ms. During this time, data error correction processing is performed and image display of 1 frame is performed. Because although data processing time is long compared to movement commands or servo control information, because the overall data amount is huge, a high speed data transmission rate is set, and along with data processing time high speed data request rate is required. Although data accuracy is maintained by error correction, it is required to transmit a large amount of data at high speed.

Movement commands or servo control information classified as (B) are, for example, items such as servo control signals for electromagnetic motors such as servo motors. For motor drive control, depending on the contents of the control there are cases in which rapid responses are required. For example, there are cases in which high speed responses are required when it is required to issue movement commands with respect to motors based on feedback from servo control information such as position information or torque information from a motor. On the other hand, compared to image data the amount of data required for movement commands or servo control information is small. From this, as a standard for field networks in the field of FA, data transmission rates of 125 MBPS are generally used. On the other hand, for the data processing time for 1 command, from the communication protocol specifications or limits due to the motor control, for example, high speeds of around 1 µs are required. A medium speed data request rate is required along with this data transmission rate and data processing time. Also, for data error processing, accuracy is required for commands, and, in order to avoid control values not being communicated, processing is performed by majority logic. For example, the same movement commands or servo control information is transmitted 3 times after being given parity coding. Matches or mismatches are inspected at a parity check among the 3 times of the command, and in case of matching are given a large coefficient and ratings are collected for each data value. As a result, data obtained with the highest rating becomes the definitive value. By multiple times data transmission and majority logic, accurate data values can be transmitted while maintaining accuracy. Also, error processing is easy and high speed processing can be performed.

I/O signals classified as (C) are, for example, turn on/off light instruction signals to display devices such as lamps, or signals outputted from sensors, or signals inputted by switches. For these signals high speeds are not required and it is sufficient, for example, if a data transmission rate of several KHz and around 1 ms data processing time can be maintained. A low speed data request rate is required along with this data transmission rate and data processing time. Data error processing is performed by multiple times transmission after giving parity coding. Transmitted data is acquired by checking that all data from continuous transmission is the same data value. If there is a case in which a data value is different for even 1 time out of the continuous transmission, data transmission is canceled. A signal for which the original state can be maintained even when data transmission is canceled using low speed signal transmission.

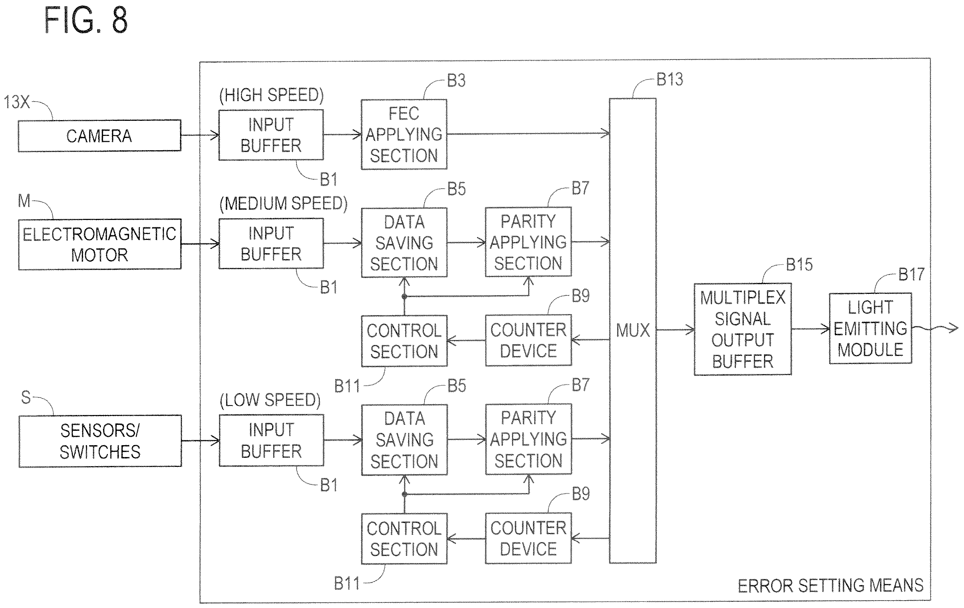

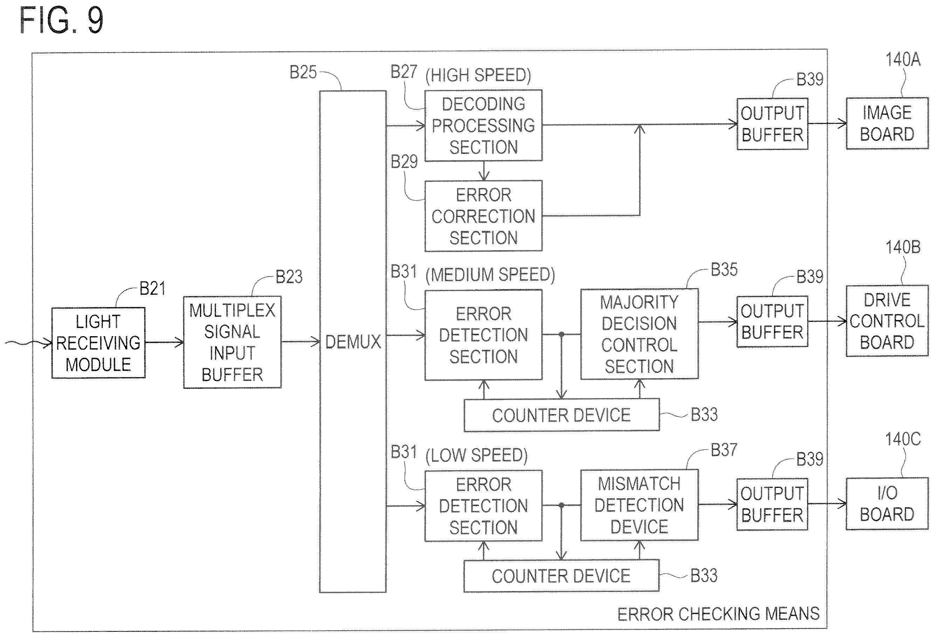

FIG. 8 is a block diagram showing the control device of optical wireless device 1 equipped on the transmitting side. FIG. 9 is a block diagram showing the control device of optical wireless device 3 equipped on the receiving side.

Below describes the block diagram (refer to FIG. 8) for optical wireless device 1. Image data transmitted from cameras 13X, servo control information transmitted from electromagnetic motors M, and I/O signals transmitted from sensors/switches S are, each, taken into input buffer B1, and error setting processing is performed for each data type.

Image data taken into input buffer B1 is given forward error correction (FEC) coding by FEC applying section B3 calculated for image data. Image data given FEC is transmitted to multiplexing section (MUX) B13.

Servo control information taken into input buffer B1 is given parity coding by parity coding section B7 after being saved in data saving section B5. Servo control data given parity coding is transmitted to multiplexing section (MUX) B13. The number of times transmission is performed to the multiplexing section (MUX) is counted by counter device B9. Control section B11 controls data saving section B5 and parity coding section B7 based on the count value counted by counter device B9. In other words, when the number of transmission times of the same data counted as the count value has reached the number of times defined in advance for majority logic, the contents of data saving section B5 are updated. Also, while the count value has not reached the defined number of time, for each multiplexing by multiplexing section (MUX) B13, parity coding is given to servo control information saved in data saving section B5 and then transmitted to multiplexing section (MUX) B13.

I/O signals taken into input buffer B1 are processed in the same way as servo control information. In other words, they are given parity coding by parity coding section B7 after being saved in data saving section B5, and then are transmitted to multiplexing section (MUX) B13. The number of times transmission is performed to the multiplexing section (MUX) is counted by counter device B9. Control section B11 controls data saving section B5 and parity coding section B7 based on the count value counted by counter device B9. In other words, when the number of transmission times of the same data counted as the count value has reached the number of times defined in advance, the contents of data saving section B5 are updated. Also, while the count value has not reached the defined number of time, for each multiplexing by multiplexing section (MUX) B13, parity coding is given to I/O signals saved in data saving section B5 and then transmitted to multiplexing section (MUX) B13.

Data multiplexed in multiplexing section (MUX) B13 is transmitted to light emitting module B17 via multiplex signal output buffer B15, converted into light signals and sent down communication path 7.

Below describes optical wireless device 3 (refer to FIG. 9) of the receiving side. Light signals transmitted down communication path 7 are received by light receiving module B21 and converted into electric signals. The converted electric signals are separated into each data by demultiplexing section (DEMUX) B25 after being transmitted to multiplex signal input buffer B23. Error detection processing or error detection/correction processing is performed based on the error setting means set for each data type with respect to each separated data.

For high speed image data, error detection is performed based on forward error correction (FEC) at decoding processing section B27, and correction processing is performed as necessary on incorrect data values at error correction section B29. Corrected image data is transmitted to image board 140A via output buffer B39.

For medium speed servo control information, parity checks are performed at error detection section B31. For this, counter device B33 is provided, and the number of times parity checks are performed at error detection section B31 is counted. While number of times the same data is received which is used as the count value is less than a number of times defined in advance as majority logic processing, parity checks are continued for servo control information which is further transmitted. When the count value reaches the defined value, the servo control information value is defined based on majority logic defined in advance at majority decision control section B35. At the same time, the contents of error detection section B31 are updated and it waits for the next servo control information transmission. The servo control information data value defined by majority logic processing is transmitted to drive control board 140B via output buffer B39.

For low speed I/O signals, the same processing as for servo control information is performed. In other words, parity checks are performed at error detection section B31. For this, counter device B33 is provided, and the number of times parity checks are performed at error detection section B31 is counted. While number of times the same data is received which is used as the count value is less than a number of times defined in advance, parity checks are continued for I/O signals which are further transmitted. When the count value reaches the defined value, a match/mismatch decision is made for the I/O signal data value for the defined number of times of data transmission at matching detection device B37. If the data value is judged to be a match, the matching data value is transmitted to I/O board 140C via output buffer B39. If a mismatched data value is detected, the defined number of times of transmitted I/O signals are all discarded.

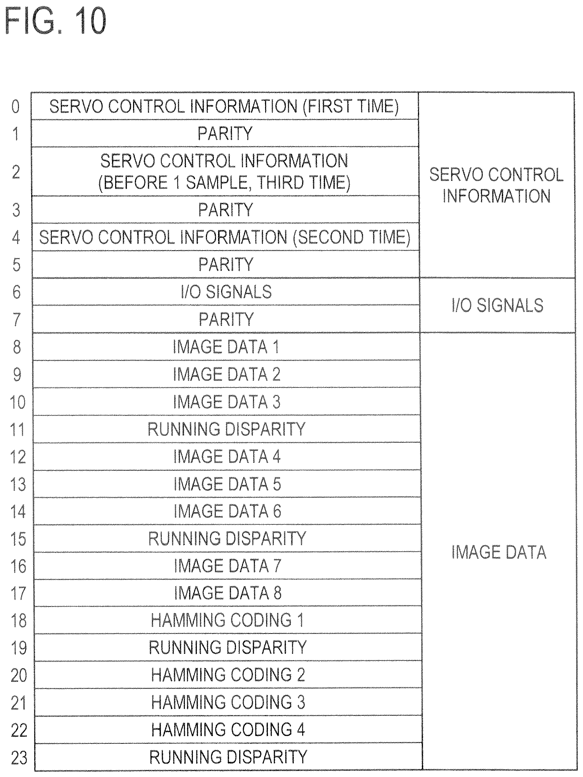

FIG. 10 is an example of a multiplex data string. This example shows multiplexing of the 3 types of data shown by example in FIG. 7. This sets as conditions performing multiplex communication at a data transmission rate of 3 GBPS, with 1 frame as 8 nsec. With these conditions, 1 frame can be configured in 24-bit. Furthermore, this takes servo control information as being transmitted 3 times.

According to the above conditions, 6 bits from number 0 to number 5 are maintained for the transmission bit width per frame of the servo control information; 2 bits from number 6 to number 7 are maintained for the transmission bit width per frame of the I/O signals; and 16 bits from 8 to 23 are maintained for the transmission bit width per frame of the image data.

If the number of times for repeating transmission is defined as 3 for majority logic processing 1 bit of servo control information, applying a parity bit for each bit requires a total of 6 bits. Because 6 bits per frame are being maintained, transmission bit width of 1 bit of servo control information for each 1 frame is maintained. Here, the condition is 8 nsec for 1 frame, so this complies with the 125 MBPS (refer to FIG. 7) data transmission rate required for servo control information. According to the example frame conditions in FIG. 10, 1 bit servo control information transmission by 3 times transmission majority logic processing is possible.

In this case, the number 2 bit servo control information is the third transmission with regard to the 1 sample before servo control information. For at least one transmission from among the 3 transmissions, by making the transmitted frame a different frame, the probability of being influenced by the effects of a burst error are reduced and data transmission can be performed accurately.

Also, with regard to image data, from the 16 bit bit width of number 8 to number 23, 8 bit transmission of image data is performed. 4 remaining bits are Hamming coding. The 4 further remaining bits are the running disparity bits.

Because the period per frame is 8 nsec (frequency is 125 MHz), if 8 bits of image data are transmitted per frame, in units of time, this is 8 x 125 M = 1 Gbit, which conforms to the data transmission rate for image data shown as an example in FIG. 7.

Here, the running disparity-parity is a technique for inserting the reverse bit value among consecutive bit strings of the same bit value. This is an item inserted to synchronize the multiplex data strings being transmitted at the receiving side.

In the FIG. 10 frame example, under conditions which allow inserting up 4 bit running disparity-parity and 4 bit Hamming coding, an example is one in which the configuration satisfies 1 GBPS data transmission rate specifications.

Further, with regard to I/O signals, compared to frame conditions configuring multiplex data strings, the data transmission rate is low, so sufficient support is possible so long as 2 bit width is maintained.

As described in the details above, by this embodiment, I/O signal information, servo control information, and image data for which the data transmission rate and data processing time are respectively different, are each multiplexed and transmitted after performing error settings based on the data type. Due to this, it is possible to perform individual error detection processing or error detection/correction processing at the receiving side.

In this case, error processing is not performed on the overall multiplexed data string, so check processing of the errors made on the overall multiplexed data string is not required on the receiving side. Error checking processing can be performed based on the data type, such as image data, servo control data, and I/O signals, and it is possible to optimize the error detection, error detection/correction processing time for each data type.

Here, each of image data, servo control data, and I/O signals are examples of each different data types; further examples of each different data type are movement commands and display signals. Also, FEC applying section B3 is an example of an error setting means, and an example error setting means is configured from data saving section B5, parity applying section B7, counter device B9, and control section B11. Also, the data string configuring 1 frame shown in FIG. 10 is an example of a multiplexed data string. Also, multiplexing section (MUX) B13 is an example of a multiplexing means, and demultiplexing section (DEMUX) B25 is an example of a restoration means. Also, an example error checking means is configured from decoding processing section B27 and error correction section B29, an example error checking means is configured from error detection section B31, counter device B33, and majority decision control section B35, and an example error checking means is configured from error detection section B31, counter device B33, and matching detection device B37.

Further, the present invention is not limited to the above embodiment, and it goes without saying that it is possible to make various improvements and changes that do not extend beyond the scope of the present invention. For example, in the present embodiment an example was described of communication using optical wireless means, but this application is not limited by this. The same can be applied for wired communication, and the same can be applied for electromagnetic communication instead of optical communication. Also, in this embodiment, descriptions were mainly given about data transmission from cameras 13X, electromagnetic motors M, and sensors/switches S to control device 140, but this application is not limited by this. The same can be applied when multiplexing items such as lighting control signals of display lamps 122 together with movement commands when moving electromagnetic motors M from control device 140. Also, the same can be applied when performing bundled multiplexing communication for multiple electronic component mounter machines 10. Symbol descriptions

1, 3: Optical wireless device; 7: Communication path; 10: Electronic component mounter machine; 13X: Camera; 26: Conveyance device; 28: Mounting head; 30: Moving device; 32: Supply device; 44, 64, 68: Electromagnetic motor; 122: Display lamp; 124: Display section; 130: Mark camera; 132: Parts camera; 140: Control device; 140A: Image board; 140B: Drive control board; 140C: I/O board; 142: Controller; 144: Drive circuit; 146: Control circuit; B1: Input buffer; B3: FEC applying device; B5: Data saving section; B7: Parity applying section; B9: Counter device; B11: Control section; B13: Multiplexing section (MUX); B15: Multiplex signal output buffer; B17: Light emitting module; B21: Light receiving module; B23: Multiplex signal input buffer; B25: Demultiplexing section (DEMUX); B27: Decoding processing section; B29: Error correction section; B31: Error detection section; B33: Counter device; B35: Majority decision control section; B37: Matching detection device; B39: Output buffer; M: Electromagnetic motor; S: Switch/sensor

## Claims

1. A transmitting device for transmitting data by multiplexing multiple data pieces belonging to multiple data types, wherein for each data type a different data transmission rate and a different required data processing time are defined, the transmission device comprising:
an error setting means (B3, B7, B11) for performing error processing on each of said multiple data for error detection or error correction based on said data transmission rate and said data processing time; and
a multiplexing means (B13) for multiplexing the multiple data on which error processing for error detection or error correction was performed by said error setting means (B3, B7, B11) into multiplexed data strings;
**characterized in that**
the multiple data pieces include image data, servo control information data and I/O signals; and
the error setting means perform forward error correction processing on image data, and multiple times repeated transmission on servo control information data and on I/O signals.

2. The transmitting device according to claim 1, wherein
the processing performed with respect to said image data is Reed-Solomon coding or Hamming coding.

3. The transmitting device according to any of claims 1 to 2 wherein it does not perform error processing with respect to said multiplexed data strings.

4. A receiving device of receiving multiplexed data pieces belonging to multiple data types, wherein for each data type a different data transmission rate and a different required data processing time are defined, the receiving device comprising:
a restoration means (B25) for de-multiplexing said multiple data from said multiplexed data strings multiplexed by the transmission side; and
an error checking means (B27 to B37) for performing error detection processing or error detection/correction processing based on the error processing performed by the transmission side and based on said data processing time and said data transmission rate;
**characterized in that**
the multiple data pieces include image data, servo control information data and I/O signals; and
the error checking means perform forward error correction decoding on image data, majority logic processing of multiple times repeated transmission on servo control information data, and checking whether the data value of multiple times repeated transmissions is the same data value on I/O signals.

5. The receiving device according to claim 4, wherein the processing performed with respect to said image data is Reed-Solomon decoding or Hamming decoding.

6. A multiplexing communication system for performing communication by multiplexing multiple data belonging to multiple data types, wherein for each data type a data transmission rate and a required data processing time are defined, the multiplexing communication system comprising:
a transmitting device according to any of claims 1 to 3; and
a receiving device according to claim 4 or claim 5.

## Patentansprüche

1. Übertragungsvorrichtung zum Übertragen von Daten durch Multiplexen mehrerer Datenteile, die zu mehreren Datentypen gehören, wobei für jeden Datentyp eine andere Datenübertragungsrate und eine andere erforderliche Datenverarbeitungszeit definiert sind, wobei die Übertragungsvorrichtung umfasst:
eine Fehlereinstelleinrichtung (B3, B7, B11) zum Durchführen einer Fehlerbearbeitung an jedem der mehreren Daten zur Fehlererkennung oder Fehlerkorrektur auf der Basis der Datenübertragungsrate und der Datenverarbeitungszeit und
eine Multiplexeinrichtung (813) zum Multiplexen der mehreren Daten, an denen eine Fehlerbearbeitung zur Fehlererkennung oder Fehlerkorrektur durch die Fehlereinstelleinrichtung (B3, B7, B11) durchgeführt wurde, in gemultiplexte Datenketten;
**dadurch gekennzeichnet, dass**
die mehreren Datenteile Bilddaten, Servosteuerungs-Informationsdaten und E/A Signale aufweisen und
die Fehlereinstelleinrichtung eine Vorwärtsfehlerkorrekturverarbeitung der Bilddaten und eine mehrere Male wiederholte Übertragung an den Servosteuerungs-Informationsdaten und an E/A Signalen durchführt.

2. Übertragungsvorrichtung nach Anspruch 1, wobei
die mit Bezug auf die Bilddaten durchgeführte Bearbeitung eine Reed-Solomon-Codierung oder eine Hamming-Codierung ist.

3. Übertragungsvorrichtung nach einem der Ansprüche 1 bis 2, wobei sie keine Fehlerbearbeitung mit Bezug auf die gemultiplexten Datenketten durchführt.

4. Empfangsvorrichtung zum Empfangen von gemultiplexten Datenteilen, die zu mehreren Datentypen gehören, wobei für jeden Datentyp eine andere Datenübertragungsrate und eine andere erforderliche Datenverarbeitungszeit definiert sind, wobei die Empfangsvorrichtung umfasst:
eine Wiederherstellungseinrichtung (825) zum Demultiplexen der mehreren Daten aus den gemultiplexten Datenketten, die von der Sendeseite gemultiplext wurden; und
eine Fehlerprüfeinrichtung (B27 bis B37) zum Durchführen einer Fehlererkennungsbearbeitung oder einer Fehlererkennungs-/Korrekturbearbeitung auf der Basis der von der Übertragungsseite durchgeführten Fehlerbearbeitung und auf der Basis der Datenverarbeitungszeit und der Datenübertragungsrate;
**dadurch gekennzeichnet, dass**
die mehreren Datenteile Bilddaten, Servosteuerungs-Informationsdaten und E/A Signale aufweisen und
die Fehlerprüfeinrichtung eine Vorwärtsfehlerkorrekturdekodierung von Bilddaten, eine Majoritätslogikbearbeitung einer mehrere Male wiederholten Übertragung an Servosteuerungs-Informationsdaten und eine Prüfung durchführt, ob der Datenwert der mehrere Male wiederholten Übertragungen der gleiche Datenwert an den E/A Signalen ist.

5. Empfangsvorrichtung nach Anspruch 4, wobei die mit Bezug auf die Bilddaten durchgeführte Bearbeitung eine Reed-Solomon-Decodierung oder eine Hamming-Decodierung ist.

6. Multiplexkommunikationssystem zum Durchführen einer Kommunikation durch Multiplexen mehrerer Daten, die zu mehreren Datentypen gehören, wobei für jeden Datentyp eine Datenübertragungsrate und eine erforderliche Datenverarbeitungszeit definiert sind, wobei das Multiplexkommunikationssystem umfasst:
eine Übertragungsvorrichtung nach einem der Ansprüche 1 bis 3 und
eine Empfangsvorrichtung nach Anspruch 4 oder Anspruch 5.

## Revendications

1. Dispositif de transmission destiné à transmettre des données en multiplexant de multiples fragments de données appartenant à de multiples types de données, où sont définis pour chaque type de données un débit différent de transmission de données et un temps différent de traitement des données requis, le dispositif de transmission comprenant :
un moyen d'établissement d'erreur (B3, B7, B11) destiné à effectuer un traitement d'erreur sur chacune desdites multiples données en vue d'une détection d'erreur ou d'une correction d'erreur sur la base dudit débit de transmission des données et dudit temps de traitement des données, et
un moyen de multiplexage (B13) destiné à multiplexer les multiples données sur lesquelles a été effectué par ledit moyen d'établissement d'erreur (B3, B7, B11) un traitement d'erreur en vue de la détection d'erreur ou de la correction d'erreur dans des séries de données multiplexées,
**caractérisé en ce que**
les multiples fragments de données incluent des données d'image, des données d'informations de commande asservie et des signaux d'entrée / sortie, et
le moyen d'établissement d'erreur effectue un traitement de correction d'erreur avant sur des données d'image, ainsi qu'une transmission répétée de multiples fois sur les données d'informations de commande asservie et sur les signaux d'entrée / sortie.

2. Dispositif de transmission selon la revendication 1, dans lequel
le traitement effectué par rapport aux dites données d'image est un codage Reed - Solomon ou un codage de Hamming.

3. Dispositif de transmission selon l'une quelconque des revendications 1 et 2, dans lequel il n'effectue pas de traitement d'erreur par rapport aux dites séries de données multiplexées.

4. Dispositif de réception destinée à recevoir des fragments de données multiplexés appartenant à de multiples types de données, où sont définis pour chaque type de données un débit différent de transmission de données et un temps différent de traitement des données requis, le dispositif de réception comprenant :
un moyen de restauration (B25) destiné à démultiplexer lesdites multiples données à partir desdites séries de données multiplexées qui ont été multiplexées par le côté de transmission, et
un moyen de contrôle d'erreur (B27 à B37) destiné à effectuer un traitement de détection d'erreur ou un traitement de détection et correction d'erreur sur la base du traitement d'erreur effectué par le côté de transmission, et sur la base dudit temps de traitement de données et dudit débit de transmission de données,
**caractérisé en ce que**
les multiples fragments de données incluent des données d'image, des données d'informations de commande asservie et des signaux d'entrée / sortie, et
le moyen de contrôle d'erreur effectue un décodage de correction d'erreur avant sur les données d'image, un traitement par logique majoritaire de la transmission répétée de multiples fois sur les données d'informations de commande asservie et un contrôle de ce que la valeur des données des transmissions répétées de multiples fois représente la même valeur de données sur les signaux d'entrée / sortie.

5. Dispositif de réception selon la revendication 4, dans lequel le traitement effectué par rapport aux dites données d'image est un décodage Reed - Solomon ou un décodage de Hamming.

6. Système de communication par multiplexage destiné à effectuer une communication en multiplexant de multiples données appartenant à de multiples types de données, où sont définis pour chaque type de données un débit différent de transmission de données et un temps différent de traitement des données requis, le système de communication par multiplexage comprenant :
un dispositif de transmission conforme à l'une quelconque des revendications 1 à 3, et
un dispositif de réception conforme à la revendication 4 ou à la revendication 5.
